# EUROPÄISCHE PATENTSCHRIFT

(11) **EP 4 494 367 B1**
(45) Veröffentlichungstag und Bekanntmachung des Hinweises auf die Patenterteilung: **11.06.2025**
(21) Anmeldenummer: 23772835.7
(22) Anmeldetag: 15.09.2023
(51) Int. Cl.: H04W 4/40, H04L 43/16, B60W 50/14, B60K 35/22, B60K 35/26, B60K 35/81

(54) **BENACHRICHTIGUNGSMANAGEMENTVERFAHREN FÜR EINE FAHRZEUGBASIERTE MENSCH-MASCHINESCHNITTSTELLE UND FAHRZEUG MIT EINEM BENACHRICHTIGUNGSMANAGEMENTSYSTEM**
NOTIFICATION MANAGEMENT METHOD FOR A VEHICLE-BASED HUMAN-MACHINE INTERFACE, AND VEHICLE COMPRISING A NOTIFICATION MANAGEMENT SYSTEM
PROCÉDÉ DE GESTION DE NOTIFICATION POUR UNE INTERFACE HOMME-MACHINE BASÉE SUR UN VÉHICULE, ET VÉHICULE COMPRENANT UN SYSTÈME DE GESTION DE NOTIFICATION

(30) Priorität: 27.09.2022 DE 102022003536
(43) Veröffentlichungstag der Anmeldung: 22.01.2025
(73) Patentinhaber: Mercedes-Benz Group AG, 70372 Stuttgart (DE)
(72) Erfinder: NGUYEN, Theodor Minh-Thien, 71088 Holzgerlingen (DE)
(74) Vertreter: Novagraaf Group
(86) Internationale Anmeldenummer: PCT/EP2023/075537
(87) Internationale Veröffentlichungsnummer: WO 2024/068316

(56) Entgegenhaltungen:
- US-A1- 2013 038 437

## Beschreibung

Die Erfindung betrifft ein Benachrichtigungsmanagementverfahren für eine fahrzeugbasierte Mensch-Maschine-Schnittstelle nach der im Oberbegriff von Anspruch 1 näher definierten Art sowie ein Fahrzeug mit ein Benachrichtigungsmanagementsystem.

Die Weiterentwicklung von Assistenzsystemen geht einher mit einer erhöhten Anforderung an das Informationsmanagement für Infotainmentsysteme in Fahrzeugen, die zunehmend zu einer komplexen Mensch-Maschine-Schnittstelle erweitert werden. Dabei sind eine Vielzahl von Interaktionskanälen zur Informationsübermittlung und Einwirkung auf einen Fahrer vorgesehen. Einen klassischen Interaktionskanal zur Darstellung visueller Informationen stellt eine grafische Nutzerschnittstelle (Graphical-User-Interface GUI) dar, die typischerweise als berührungsempfindliches Display in der Fahrzeugkonsole angelegt ist. Neben großformatigen Flüssigkristalldisplays werden hierfür zunehmend Projektionssysteme vorgesehen, die Bilder auf den Fahrzeuginnenflächen erzeugen. Auch eine vom Fahrer getragene, mit dem Infotainmentsystem drahtlos kommunizierende Datenbrille bietet einen möglichen visuellen Interaktionskanal. Bedeutsam ist auch die Nutzung von akustischen Interaktionskanälen, beispielsweise über einen Sprachassistenten, mittels eines Warntons oder durch eine wiedererkennbare Nachrichtenmelodie.

Ferner kann die Mensch-Maschine-Schnittstelle auch taktile Signale sowie sonstige Einwirkungsmöglichkeiten auf einen Fahrer zur Informationsübermittlung nutzen. Möglich sind auch unterschwellige Maßnahmen zur Aufmerksamkeitssteigerung und zur allgemeinen Verbesserung des Reisekomforts. Beispielsweise ist als alternativer Interaktionskanal ein gezielter Luftstrom oder ein Wärme-, Kälte- oder geruchlicher Reiz anwendbar. Auch eine Sitzmassageeinrichtung stellt einen möglichen Interaktionskanal einer fahrzeugbasierten Mensch-Maschine-Schnittstelle für die Benachrichtigungsübermittlung dar.

Zusätzlich zur Übermittlung fahrzeug- und umgebungsrelevanter Daten besteht vielfach der Wunsch, während einer Fahrt auch Benachrichtigungen zur Unterhaltung zu empfangen sowie im ständigen Kontakt zur Außenwelt zu bleiben. Daher fallen unter die möglichen Benachrichtigungen durch die Mensch-Maschine-Schnittstelle auch das Abspielen von Medieninhalten, beispielsweise Filme oder Musikvideos, oder Audioinhalten, wie Hörbücher, Musikstücke, Podcasts und dergleichen. Zusätzlich soll ein von der Mensch-Maschine-Schnittstelle initiiertes Einspielen von Social-Media-Inhalten oder Podcasts oder die Ausgabe von durch ein Chat- oder ein Videokonferenzprogramm generierten Daten möglich sein. Dabei handhabt die Mensch-Maschine-Schnittstelle nicht nur Benachrichtigungen für den Fahrer, sondern auch solche, die primär für weitere Fahrzeuginsassen bestimmt sind.

Die zunehmende Informationsdichte und die erweiterten Interaktionsmöglichkeiten führen zur Notwendigkeit, aus der Fülle der möglichen nicht unmittelbar vom Fahrer abgefragten, sondern von der Mensch-Maschine-Schnittstelle ausgehenden Benachrichtigungen, die vorliegend als proaktive Benachrichtigungen bezeichnet werden, eine Auswahl zu treffen und zu entscheiden, zu welchem Zeitpunkt und über welchen der zur Verfügung stehenden Interaktionskanäle der Fahrer bzw. die Fahrzeuginsassen mittels einer solchen Benachrichtigung angesprochen werden sollen. Es muss vermieden werden, dass eine Ablenkung, Ermüdung oder Überforderung, insbesondere des Fahrers, durch die Benachrichtigungsfolge eintritt. Zusätzlich darf der ständige Strom proaktiver Benachrichtigungen und die gewählte Übermittlungsart nicht dazu führen, dass ein Gefühl von Langeweile oder einer Gängelung durch die Mensch-Maschine-Schnittstelle eintritt. Relevante Informationen in der Benachrichtigungsfolge müssen vor allem für den Fahrer bewusst wahrnehmbar und zeitgerecht übermittelt werden. Diese Herausforderungen werden an ein Verfahren und ein hierfür verwendetes System für das Benachrichtigungsmanagement gestellt.

Verfahren zur Priorisierung von Nachrichten sind aus weiteren technischen Gebieten bekannt. Beispielsweise beschreibt die US 2021 0337039 A1 ein Priorisierungssystem für von mehreren Apps auf einem elektronischen Gerät generierten Nachrichten. Behandelt wird eine regelbasierte Auswahl von App-Benachrichtigungen zur Weiterleitung an ein einzelnes Benutzerinterface, vorliegend ein einziges Display, auf der Grundlage einer an für die jeweilige App beim Installationsprozess vergebenen Priorität, wobei der typische Anwendungsfall ein Computersystem darstellt, auf dem eine Vielzahl von Benachrichtigungen generierenden Softwareprogrammen, wie ein E-Mail-Programm oder Spiele, ablaufen. Das Priorisierungssystem stellt sicher, dass in einem vorgegebenen Zeitraum eine vorbestimme Anzahl der an den Systembenutzer weitergeleiteten App-Benachrichtigungen nicht überschritten wird, wobei im Fall mehrerer parallel eintreffender Benachrichtigungen nur jene Information für die Displaydarstellung ausgewählt wird, die von der App mit der höchsten Priorität stammt. Die Anwendung eines solchen regelbasierten Konzepts mit initial konfigurierten Prioritäten für eine Mensch-Maschine-Schnittstelle eines Fahrzeugs führt insbesondere aufgrund der Vielzahl von fahrzeugseitigen Interaktionskanälen zu einem komplexen System mit einem hohen Verwaltungsaufwand für die Konfiguration.

Ein weiteres Nachrichtenpriorisierungsverfahren ist aus EP 1 287 444 B1 bekannt, wobei als primäre Anwendung die Handhabung von E-Mails vorgesehen ist. Vorgeschlagen wird, Nachrichten mit einem Klassifikator zu versehen, der die Dringlichkeit und/oder Relevanz insbesondere einer E-Mail festlegt. Die Auswahl für die einem Benutzer zugeleiteten Nachrichten erfolgt dann regelbasiert durch die Abfrage des Klassifikators und anhand eines Profils, das zumindest initial vom Empfänger eingerichtet wird. Typischerweise werden benutzerseitig unterschiedliche Profile angelegt, die vom Aufenthaltsort und der jeweiligen Tätigkeit abhängen, beispielsweise können unterschiedliche Profile für die Arbeit, Freizeit, Urlaub, Reise etc. vorgesehen sein. Bei einer Tätigkeit außerhalb des Arbeits- oder Wohnorts werden durch das Nachrichtenpriorisierungssystem automatisiert ausgewählte E-Mails einem festgelegten Mobilgerät des Nutzers anstatt seinem Desktop zugeleitet. Der Wechsel zwischen Profilen erfolgt durch eine Benutzereingabe oder indem Benutzereinträge, etwa in einem persönlichen elektronischen Kalender, abgefragt werden.

Das durch EP 1 287 444 B1 vorgeschlagene Nachrichtenpriorisierungsverfahren führt bei einer fahrzeugbasierten Mensch-Maschine-Schnittstelle zu einer Anwendung, die vom jeweiligen Anwender aufwendig vor dem Fahrantritt konfiguriert werden muss. Bereits für die individuelle Festlegung der Priorisierungsregeln zur Nutzung der Basisfunktionalität einer komplexen fahrzeuggebundenen Mensch-Maschine-Schnittstelle ist dann ein hoher Aufwand seitens des Benutzers vor dem Fahrantritt notwendig. Die Aktivierung des vollen Funktionsumfangs bedarf einer tiefergehenden Einarbeitung zur regelbasierten Profileinstellung, die ohne Expertenwissen zur jeweiligen fahrzeugbasierten Mensch-Maschine-Schnittstelle nicht ausgeführt werden kann.

Aus US 9,769,106 B2 ist ein Verfahren für ein mobiles Endgerät zur regelbasierten Darstellung und Priorisierung visueller Nachrichten auf der Grundlage einer angepassten Kachelgestaltung auf dem Display des mobilen Endgeräts bekannt. Hierzu dient ein vordefiniertes Regelwerk zur Unterteilung von Nachrichten in Kategorien, die dann auf unterschiedlichen Bereichen des Displays kategoriespezifisch dargestellt werden. Nachrichten innerhalb derselben Kategorie werden in der Reihenfolge gezeigt, die ihrer Priorität entspricht. Zur Festlegung der Priorisierung innerhalb einer Nachrichtenkategorie wird eine Analyse des Nutzerverhaltens ausgeführt. Bestimmt werden die Nachrichtenquelle und die durchschnittliche Zeitdauer, mit der der Benutzer des mobilen Endgeräts auf eine Nachricht der jeweiligen Nachrichtenquelle reagiert. Eine Anwendung des beschriebenen Nachrichtenpriorisierungsverfahrens für eine fahrzeugbasierte Mensch-Maschine-Schnittstelle führt zur grundlegenden Schwierigkeit, dass bei Fahrzeuganwendungen eine große Bandbreite von Nachrichtentypen vorliegt, die sich meist nicht einheitlich klassifizieren lassen. Eine weitere Schwierigkeit ergibt sich aus der Komplexität der Mensch-Maschine-Schnittstelle eines Fahrzeugs mit einer Vielzahl von Interaktionskanälen. Darüber hinaus ist die für die Priorisierung geforderte Analyse des Benutzerverhaltens, insbesondere seine Reaktionsdauer auf Nachrichten einer bekannten Nachrichtenquelle, für eine Vielzahl von proaktiven, vom Fahrzeug liniierten Benachrichtigungen nicht ausführbar.

Ferner offenbart US 2013/038437 A1 ein System zur Verwaltung von Aufgaben und Benachrichtigungen in einem verbundenen Fahrzeug. Dabei sollen während der Nutzung des Fahrzeugs mehrere Benachrichtigungen an den Fahrer des Fahrzeugs visuell über eine Anzeigevorrichtung ausgegeben werden. Die Benachrichtigungen werden anhand einer Priorisierung einer Warteschlange zugeordnet. Es wird anhand von Umweltinformationen oder dem Fahrkontext eine Aufmerksamkeitsmetrik für den Fahrer bestimmt. Verfügt der Fahrer in Abhängigkeit der Aufmerksamkeitsmetrik über eine ausreichende Auffassungsgabe für Benachrichtigungen, werden diese in Abhängigkeit der jeweiligen Priorisierung ausgegeben.

Der vorliegenden Erfindung liegt die Aufgabe zugrunde, ein verbessertes Benachrichtigungsmanagementverfahren für eine fahrzeugbasierte Mensch-Maschine-Schnittstelle anzugeben, mit dessen Hilfe Benachrichtigungen so zeitlich und im Hinblick auf den gewählten Benachrichtigungskanal insbesondere an den Fahrer übermittelt werden, dass dessen Aufmerksamkeit nicht beeinträchtigt wird und er diese nicht als störend empfindet. Dabei soll insbesondere das Benachrichtigungsmanagementverfahren für proaktive Benachrichtigungen im Fall mehrerer möglicher Benachrichtigungskanäle ohne eine aufwendige Systemkonfiguration durch den Benutzer ausführbar sein. Ferner ist ein Fahrzeug mit einem solchermaßen verbesserten Benachrichtigungsmanagementsystem anzugeben.

Erfindungsgemäß wird diese Aufgabe durch ein Benachrichtigungsmanagementverfahren mit den Merkmalen des Anspruchs 1 gelöst. Vorteilhafte Ausgestaltungen und Weiterbildungen sowie ein Fahrzeug mit einem Benachrichtigungsmanagementsystem zur Ausführung des Benachrichtigungsmanagementverfahrens ergeben sich aus den hiervon abhängigen Ansprüchen.

Ein gattungsgemäßes Benachrichtigungsmanagementverfahren für eine fahrzeugbasierte Mensch-Maschine-Schnittstelle mit mindestens einem Benachrichtigungskanal leitet mittels eines Benachrichtigungsmanagementsystems eine Benachrichtigung, die an mindestens einen Fahrzeuginsassen und/oder ein Fahrzeugfunktionsmodul gerichtet ist, abhängig von einer mit der Benachrichtigung verknüpften Priorität an den Benachrichtigungskanal weiter oder hält die jeweilige Benachrichtigung zurück.

Das Benachrichtigungsmanagementverfahren sieht dabei vor, dass
- die mit der Benachrichtigung verknüpfte Priorität durch eine Prioritätszahl festgelegt ist;
- die Benachrichtigung dann ausgewählt und an den Benachrichtigungskanal weiterleitet wird, wenn deren Prioritätszahl einen dem Benachrichtigungskanal zugeordneten Kanalschwellwert übersteigt und diese die höchste Prioritätszahl für den jeweiligen Benachrichtigungskanal aufweist; und
- der Kanalschwellwert zeitlich veränderlich ist und in einem Normalbetriebsmodus vom Benachrichtigungsmanagementsystem in vorgegebenen Zeitintervallen auf der Grundlage von Fahrdaten und/oder Fahrzeugumfelddaten und/oder Fahrzeugdaten und/oder Zustandsdaten der Mensch-Maschine-Schnittstelle und/oder mindestens einer zeitlich vorausgegangenen Benachrichtigungsübermittlungen und/oder Fahrzeuginsassenbeobachtungsdaten zwischen einem Minimalschwellwert und einem Maximalschwellwert festgelegt wird.

Erfindungsgemäß legt das Benachrichtigungsmanagementsystem dabei für eine Mensch-Maschine-Schnittstelle mit mehreren Benachrichtigungskanälen für jeden einzelnen der Benachrichtigungskanäle einen separaten, zeitlich veränderlichen Kanalschwellwert fest und es ist einer Benachrichtigung für mindestens zwei der Benachrichtigungskanäle jeweils eine separate Prioritätszahl zugeordnet; und
es bedingt eine Änderung des Kanalschwellwerts eines ersten Benachrichtigungskanals die Änderung des Kanalschwellwerts mindestens eines zweiten Benachrichtigungskanals.

Die Benachrichtigung selbst kann dabei rein kommunikativer Natur sein, aber auch Ansteuerungssignale umfassen, welche neben der Ansteuerung von Informationselementen, wie z. B. einem Display, auch Funktionen in einem Funktionsmodul des Fahrzeugs ansteuern kann, z. B. eine Massageeinrichtung in einem Fahrzeugsitz. Diese Benachrichtigung/Ansteuerung an das Funktionsmodul kann sowohl zusammen mit einer kommunikativen Benachrichtigung erfolgen bzw. diese - z. B. als haptisches Feedback - beinhalten als auch ohne eine Solche.

Dabei wird erfindungsgemäß anstatt eines starren Regelwerks zur Priorisierung jede Benachrichtigung mit einer typischerweise dezimalen Prioritätszahl verknüpft, die als Ressource im Sinne einer Währung verstanden werden kann, mit der die Weiterleitung zu einem Benachrichtigungskanal "kaufbar" ist. Gemäß dieses Bildes der Erfindungsidee wird ein Marktwert, der jeweilige Kanalschwellwert, für die Benachrichtigungsweiterleitung festgelegt, der einer zeitlichen Veränderung in vorgegeben Grenzen zwischen einem Minimalschwellwert und einem Maximalschwellwert unterliegt. Eine Benachrichtigung kann sich dann die Zuleitung zu einem Benachrichtigungskanal sichern, d. h. sie wird aktiv und vom Benutzer über den gewählten Benachrichtigungskanal wahrnehmbar, wenn ihre Prioritätszahl mindestens den geforderten Schwellwert übersteigt und sie zugleich aktuell die "Höchstbietende" im Fall mehrerer die Schwellwertbedingung erfüllender Benachrichtigungen darstellt. Der Sonderfall übereinstimmender Prioritätszahlen kann durch die Abfrage eines weiteren Vergleichskriteriums gelöst werden, beispielsweise die Verweildauer in der Warteschleife, die als Sonderbonus für die Ermittlung einer finalen Prioritätszahl herangezogen werden kann.

Die Schwellwertfestlegung ist in einem vorgegebenen Zeitintervall zu aktualisieren. Dabei werden typische Zustandsänderungsgeschwindigkeiten für Fahrzeuge, wie einen Pkw, Lkw, Transporter, Bus oder dergleichen, und die üblicherweise vorliegenden Datenverarbeitungsgeschwindigkeiten zugrunde gelegt. Praktikabel ist die Vorgabe eines Zeitintervalls im Millisekundenbereich.

Zur Festlegung eines Schwellwerts für einen Benachrichtigungskanal wird mindestens eines der voranstehend gekannten Kriterien herangezogen, wobei eine erste Gruppe Fahrdaten, Fahrzeugumfelddaten und Fahrzeugdaten betrifft. Für ein Ausführungsbeispiel wird zum Kriterium "Fahrdaten" die aktuelle Fahrgeschwindigkeit berücksichtigt, wobei insbesondere für hohe Fahrgeschwindigkeiten vorgesehen ist, die Konzentration des Fahrers potenziell störender Benachrichtigungen zu unterbinden, sodass eine generelle Anhebung des Schwellwerts folgt.

Für ein weiteres Ausführungsbeispiel sind Fahrzeugumfelddaten relevant, wobei abgefragt werden kann, ob die Fahrt im unübersichtlichen Verkehr oder im Bereich eines Autobahnbauabschnitts mit einer reduzierten Spurbreite erfolgt, sodass eine besondere Aufmerksamkeit der Fahrer gefordert ist und die Kanalschwellwerte hoch anzusetzen sind. Weitere Kriterien aus dem Bereich Fahrzeugumfeld ergeben sich für Nachtfahrten oder einer Fahrt bei schlechten Wetterbedingungen. Vorliegend fällt auch die zeitliche Einbettung von Ereignissen unter den Begriff "Fahrzeugumfelddaten". Entsprechend werden auch der Wochentag oder der Kalendermonat, zu denen eine Fahrt stattfindet, als Fahrzeugumfelddaten verstanden.

Für eine alternative Ausführung werden Daten zur Schwellwertgenerierung berücksichtigt, die dem Kriterium "Fahrzeugdaten" zugeordnet werden können. Dieses umfasst beispielsweise die Ausstattung der Mensch-Maschine-Schnittstelle, wobei im Fall einer hohen Anzahl der zur Verfügung stehenden Benachrichtigungskanäle, die vom Fahrer bei einer Überfrequentierung meist als störend empfunden werden, die Anzahl der zu den Fahrzeuginsassen durchdringenden Benachrichtigungen mit hoch gesetzten Kanalschwellwerten reduziert wird.

Für eine weitere vorteilhafte Ausführung der Kanalschwellwert-Festsetzung werden die aktuellen Zustandsdaten der Mensch-Maschine-Schnittstelle berücksichtigt. Ist beispielsweise ein akustischer Benachrichtigungskanal durch das Abspielen einer unterhaltenden Audiodatei, beispielsweise eines Podcasts, aktiv, wird der zugeordnete Kanalschwellwert so erhöht, dass eine Sprachnachricht nur dann eingespielt wird, wenn diese als besonders relevant erachtet und mit einer Prioritätszahl über dem angehobenen Schwellwert versehen wird.

Vorteilhaft ist eine Ausgestaltung, die mindestens eine der zeitlich vorausgegangenen Benachrichtigungsübermittlungen berücksichtigt. Damit kann beispielsweise vermieden werden, dass Benachrichtigungen zeitlich zu dicht aufeinander folgen. Ferner kann die Art und Dauer mindestens einer vorausgehend aktiven Benachrichtigung ein Kriterium für die Schwellwertfestsetzung sein.

Für eine bevorzugte Ausführung sind Fahrzeuginsassenbeobachtungsdaten für die Ermittlung des Kanalschwellwerts relevant. Dies kann beispielsweise die Reaktion auf eine aktiv gewordene Benachrichtigung sein, etwa eine proaktive Benachrichtigung, die einen vorausliegenden Verkehrstau betrifft. Erfragt der Fahrer dann, beispielsweise über einen Sprachassistenten, Routenalternativen, wird der Kanalschwellwert für einen Benachrichtigungskanal, der für die Übermittlung von Social-Media-Inhalten vorgesehen ist, zur Unterbindung von Störeinflüssen deutlich erhöht. Die Fahrzeuginsassenbeobachtungsdaten können auch für die Ermittlung der Personenanzahl in einem Fahrzeug herangezogen werden, um im Fall mehrerer Insassen allgemein die Kanalschwellwerte zu erhöhen.

Zusätzlich können Fahrzeuginsassenbeobachtungsdaten über einen längeren Zeitraum mit einer personenspezifischen Zuordnung erfasst werden. Ergibt sich beispielsweise die Gewohnheit eines Fahrers, die Sitzheizung ab einer bestimmten Temperatur zu aktivieren oder die Massageeinrichtung eines Sitzes wird häufig nach einer bestimmen Fahrdauer eingeschaltet, dann kann der Schwellwert für einen mit diesen Komforteinrichtungen verknüpften Benachrichtigungskanal an die jeweilige Person angepasst abgesenkt werden, sodass eine proaktive Benachrichtigung, d. h. eine nicht durch den Benutzer selbst vorgenommene Aktivierung, einfacher erfolgen kann.

Für eine typische Mensch-Maschine-Schnittstelle eines Fahrzeugs liegen mehrere Benachrichtigungskanäle vor. Das erfindungsgemäße Benachrichtigungsmanagementverfahren führt zu einer hohen Treffersicherheit für die Auswahl des für die jeweilige Benachrichtigung geeigneten Benachrichtigungskanals. Es wird bei einer solchen Mensch-Maschine-Schnittstelle für jeden einzelnen Benachrichtigungskanal ein separater, zeitlich veränderlicher Kanalschwellwert festlegt.

Ferner wird einer Benachrichtigung, die für mindestens zwei Benachrichtigungskanäle gleichzeitig vorgesehen ist, eine für den jeweiligen Benachrichtigungskanal eigene Prioritätszahl zugeordnet. Eine Änderung des Kanalschwellwerts eines ersten Benachrichtigungskanals bedingt auch die Änderung des Kanalschwellwerts mindestens eines zweiten Benachrichtigungskanals. Beispielsweise kann eine erste Audionachricht, die den Fahrer zum Einlegen einer Pause auffordert, auf einem ersten Benachrichtigungskanal für eine primäre Sprachausgabe und zusätzlich auf einem zweiten Benachrichtigungskanal für eine sekundäre Sprachausgabe in den jeweiligen Warteschleifen vorliegen, wobei eine sekundäre Sprachausgabe das Anhängen einer Zusatzinformation an eine primäre Sprachausgabe betrifft. In beiden Benachrichtigungskanälen sollen die Prioritätszahlen der ersten Audionachricht zunächst unter den jeweiligen Kanalschwellwerten liegen, sodass diese zurückgehalten wird. Trifft dann eine relevante zweite Audionachricht für den ersten Benachrichtigungskanal ein, die beispielsweise auf einen kritisch niedrigen Ladezustand der Traktionsbatterie hinweist und deren Prioritätszahl über dem zugeordneten Kanalschwellwert liegt, erfolgt eine Aktivierung der primäre Sprachausgabe und als Folge wird der Kanalschwellwert für die sekundäre Sprachausgabe abgesenkt, sodass auch die ursprünglich wartende Benachrichtigung mit der Pausenaufforderung eine Prioritätszahl über dem Kanalschwellwert aufweist und als sekundäre Sprachnachricht unmittelbar angehängt wird. Damit erfolgt zunächst eine Aufforderung an den Fahrer, aufgrund eines niedrigen Batterieladezustands eine Ladesäule anzusteuern und dann wird dazu geraten, auch aus Gründen der Fahrsicherheit eine Pause einzulegen.

Für eine mögliche Ausführung ist die einer Benachrichtigung zugeordnete Prioritätszahl statisch. Für einer vorteilhafte Weitergestaltung ist auch die Prioritätszahl einer Benachrichtigung zumindest bis zur Übermittlung an den Benachrichtigungskanal eine dynamische Größe. Dabei wird bevorzugt, dass die zeitlich veränderliche Anpassung der Prioritätszahl im Normalbetriebsmodus vom Benachrichtigungsmanagementsystem in vorgegebenen Zeitintervallen wiederum auf der Grundlage von Fahrdaten und/oder Fahrzeugumfelddaten und/oder Fahrzeugdaten und/oder mindestens einer zeitlich vorausgegangenen Benachrichtigungsübermittlung durch die Mensch-Maschine-Schnittstelle und/oder Fahrzeuginsassenbeobachtungsdaten und/oder der Verweildauer einer Benachrichtigung in einer Warteschleife des Benachrichtigungskanals und/oder der Dauer eines Aktivierungszustands einer Benachrichtigung im Benachrichtigungskanal so vorgenommen wird, dass die Prioritätszahl zwischen einem Prioritätsminimum oberhalb des Minimalschwellwerts und einem Prioritätsmaximum unterhalb des Maximalschwellwerts eines Benachrichtigungskanals festgelegt wird.

Für vorteilhafte Ausführungsbeispiele kann bei hohen Fahrgeschwindigkeiten die Prioritätszahl einer Benachrichtigung, die auf die deutliche Abnahme des Ladezustands einer Traktionsbatterie eines Elektrofahrzeugs hinweist, mit der Zeit erhöht werden. Eine weitere Erhöhung kann dann erfolgen, wenn die Fahrzeuginsassenbeobachtungsdaten ergeben, dass der Fahrer keine adäquaten Maßnahmen unternimmt, eine Ladesäule anzusteuern. Für eine weitere bevorzugte Ausführung wächst die Prioritätszahl eines Warnhinweises, falls die Fahrzeugumfelddaten bei Temperaturen im Bereich des Gefrierpunkts optische Auffälligkeiten auf der Fahrbahn erkennen. Für weitere Ausführungen kann die Art einer vorausgegangenen Benachrichtigungsübermittlung berücksichtigt werden. Wurde den Fahrzeuginsassen beispielsweise eine Pushnachricht zu Sportmeldungen übermittelt, kann die Prioritätszahl für weitere den Bereich Sport betreffende Social-Media-Inhalte herabgesetzt werden, um die Wahrscheinlichkeit zu verringern, dass eine potenziell langweilige inhaltliche Wiederholung an die Fahrzeuginsassen übermittelt wird.

Für eine Weitergestaltung ist vorgesehen, die Prioritätszahl einer Benachrichtigung auch nach dem Weiterleiten zu einem Benachrichtigungskanal abzufragen und bevorzugt dynamisch anzupassen. Bevorzugt bleibt eine weitergeleitete Benachrichtigung so lange auf einem Benachrichtigungskanal aktiv, bis die Prioritätszahl der Benachrichtigung wieder unter den zugeordneten Kanalschwellwert fällt. Beispielsweise kann eine aktuell auf einem Fahrzeugdisplay dargestellte Textnachricht eine zeitliche degressive Prioritätszahl aufweisen, sodass diese für einen gleichbleibenden Kanalschwellwert nach einer bestimmten Zeit verschwindet. Zusätzlich kann eine Veränderung des Kanalschwellwerts eintreten, beispielsweise aufgrund einer Fahrsituation, die die volle Aufmerksamkeit des Fahrers notwendig macht und ein Ansteigen des Kanalschwellwerts bedingt. Damit verschwinden visuelle Reize vom Display, die möglicherweise die Konzentration beeinträchtigenden können.

Besonders störend werden proaktive Benachrichtigungen dann empfunden, wenn diese zu einem ständigen Informationsstrom führen. Für eine bevorzugte Ausführung hebt das Benachrichtigungsmanagementsystem nach einer Weiterleitung einer Benachrichtigung an einen Benachrichtigungskanal den zugeordneten Kanalschwellwert im nächsten Zeitintervall an. Bevorzugt werden weitere Nachrichten für eine vorbestimmte Zeit vollständig unterdrückt, indem der zugeordnete Kanalschwellwert für eine ausgewählte Zeitdauer auf den Maximalschwellwert gesetzt wird, der von keiner möglichen Prioritätszahl überschritten werden kann. Besonders vorteilhaft ist eine Ausführung, für die eine "Abkühlungsphase" nach einer Benachrichtigungskanalaktivierung eintritt, wobei hierzu in einer vorgegebenen Zeitspanne nach der Weiterleitung einer Benachrichtigung eine Degression des zugeordneten, zunächst angehobenen Kanalschwellwerts erfolgt.

Für eine zusätzliche Weiterführung der Erfindung kann eine Umschaltung vom Normalbetriebsmodus auf einen regelbasierten Modus für mindestens einen Benachrichtigungskanal der Mensch-Maschine-Schnittstelle auf der Grundlage von Fahrdaten und/oder Fahrzeugumfelddaten und/oder Fahrzeugdaten und/oder Fahrzeuginsassenbeobachtungsdaten und/oder einer fahrzeugexternen Benachrichtigung erfolgen. Dabei wird durch das Benachrichtigungsmanagementsystem für mindestens einen für den regelbasierten Modus ausgewählten Benachrichtigungskanal der Kanalschwellwert auf den Minimalschwellwert oder den Maximalschwellwert festgelegt. Wird der Maximalschwellwert gewählt, erfolgt eine vollständige Sperrung des betroffenen Benachrichtigungskanals. Umgekehrt führt die Einstellung des Minimalschwellwerts dazu, dass jede für den betroffenen Benachrichtigungskanal vorgesehene Benachrichtigung aktiv wird.

Für eine Weiterführung weist ein erfindungsgemäßes Fahrzeug ein Benachrichtigungsmanagementsystem für eine Mensch-Maschine-Schnittstelle auf, das so gestaltet ist, dass das erfindungsgemäße Benachrichtigungsmanagementverfahren ausgeführt werden kann.

Weitere vorteilhafte Ausgestaltungen des Benachrichtigungsmanagementverfahrens ergeben sich auch aus den Ausführungsbeispielen, welche nachfolgend unter Bezugnahme auf die Figuren näher beschrieben werden.

Dabei zeigen:
- Fig. 1: den zeitlichen Verlauf eines ersten Ausführungsbeispiels des erfindungsgemäßen Benachrichtigungsmanagementverfahrens;
- Fig. 2: den zeitlichen Verlauf eines zweiten Ausführungsbeispiels des erfindungsgemäßen Benachrichtigungsmanagementverfahrens; und
- Fig. 3: schematisch vereinfacht die Benachrichtigungskanäle des zweiten Ausführungsbeispiels gemäß Fig. 2.

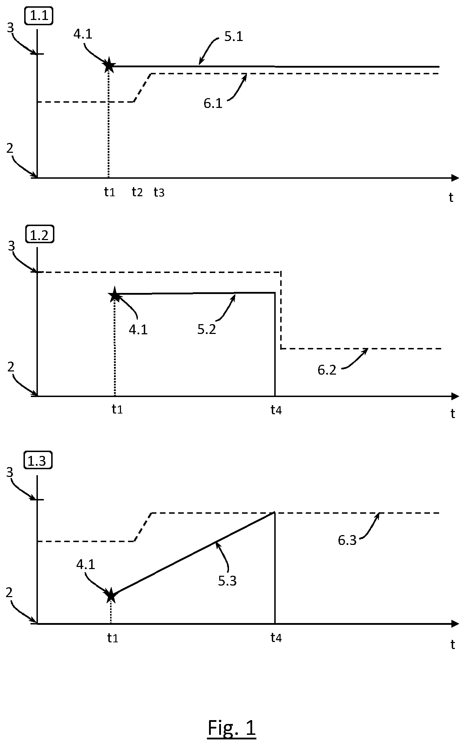

Figur 1 zeigt ein erstes Ausführungsbeispiel des erfindungsgemäßen Benachrichtigungsmanagementverfahrens anhand vereinfachter zeitlicher Ablaufschemata. Für den Zeitpunkt t1 ist das Auftreten einer proaktiven Benachrichtigung 4.1, die aufgrund eines kritisch niedrigen Ladungszustands einer Traktionsbatterie von einem Steuergerät eines Elektrofahrzeugs generiert wurde, in den Wartschleifen der schematisch symbolisierten Benachrichtigungskanälen 1.1, 1.2 und 1.3 ersichtlich. Dabei stellt der Benachrichtigungskanal 6.1 einen Nachrichtenkanal auf einem Display dar, das einen Teil einer im Einzelnen nicht dargestellten Mensch-Maschine-Schnittstelle bildet.

Die weiteren Benachrichtigungskanäle 1.2 und 1.3 sind Audiokanäle, die einem Sprachassistenten zugeordnet sind. Dabei ist der Benachrichtigungskanal 1.3 für eine primäre Sprachausgabe ohne eine weitere Bedingung ausgebildet, während der Benachrichtigungskanal 1.2 für eine sekundäre Sprachausgabe vorgesehen ist, die nur dann stattfindet, wenn diese an eine zeitlich unmittelbar vorausgehende primäre Sprachausgabe angehängt werden kann. Entsprechend ist der Benachrichtigungskanal 1.2 zum Zeitpunkt t1, zu dem diese Zusatzbedingung nicht gegeben ist, in einen regelbasierten Modus versetzt und für eine Ausgabe blockiert, wobei der für die Benachrichtigungsweiterleitung relevante Kanalschwellwert 6.2 den Maximalschwellwert 3 einnimmt. Für den Benachrichtigungskanal 1.1, der sich im Normalbetriebsmodus befindet, liegt der Kanalschwellwert 6.1 zwischen dem Minimalschwellwert 2 und dem Maximalschwellwert 3.

In der Warteschleife des Benachrichtigungskanals 1.1 ist der Benachrichtigung 4.1 eine statische Prioritätszahl 5.1 zugeordnet, die zum Zeitpunkt t1 über der für die Weiterleitung an den Benachrichtigungskanal 1.1 geforderten Kanalschwelle 6.1 liegt. Folglich resultiert eine unmittelbare Benachrichtigungsausgabe, wobei für die Generierung eines zur Benachrichtigung 4.1 korrespondierenden Nachrichtentexts auf eine Datenbank zugegriffen wird.

Für den Benachrichtigungskanal 1.3 bietet die Benachrichtigung 4.1 zum Zeitpunkt t1 eine Prioritätszahl 5.3, die unter der zugeordneten Kanalschwelle 6.3 liegt. Daher erfolgt zunächst keine Ausgabe einer primären Sprachnachricht. Die Prioritätszahl 5.3 ist dynamisch angelegt und steigt im zeitlichen Verlauf, d. h. mit zunehmender Dauer des kritisch niedrigen Ladungszustands. Ebenfalls dynamisch verhält sich die zugeordnete Kanalschwelle 6.3, wobei im zeitlichen Verlauf ein Anstieg auf ein höheres Niveau dargestellt ist. Dieser wird durch veränderte Fahrzeugumfelddaten bedingt, wobei das Fahrzeug eine Gefahrenstelle, beispielsweise eine Autobahnbaustelle, passiert und daher eine erhöhte Aufmerksamkeit des Fahrers notwendig wird. Entsprechend vollzieht das Benachrichtigungsmanagementsystem eine Kanalschwellwertanpassung zu einem höheren Wert, um den Informationsstrom zum Fahrer zu verringern.

Zum Zeitpunkt t4 übersteigt dann die Prioritätszahl 5.3 die zugeordnete Kanalschwelle 6.3, sodass das Benachrichtigungsmanagementsystem eine Weiterleitung der Benachrichtigung 4.1 in den Benachrichtigungskanal 1.3 vollzieht, wobei für die Umsetzung der Benachrichtigung 4.1 in eine primäre Sprachnachricht wiederum eine Datenbank abgefragt wird. Das Absetzen der primären Sprachnachricht zum Zeitpunkt t4 bedingt eine Änderung der Zustandsdaten der Mensch-Maschine-Schnittstelle, sodass die Benachrichtigung 4.1 aus den Warteschleifen für die Benachrichtigungskanäle 4.2 und 4.3 gestrichen werden. Daher hat auch das Umschalten des Benachrichtigungskanals 1.2 in den Normalbetriebsmodus aufgrund der Ausgabe der primären Sprachnachricht über den Benachrichtigungskanal 1.3 keine wahrnehmbare Auswirkung, da dessen Warteschleife zuvor geleert wurde.

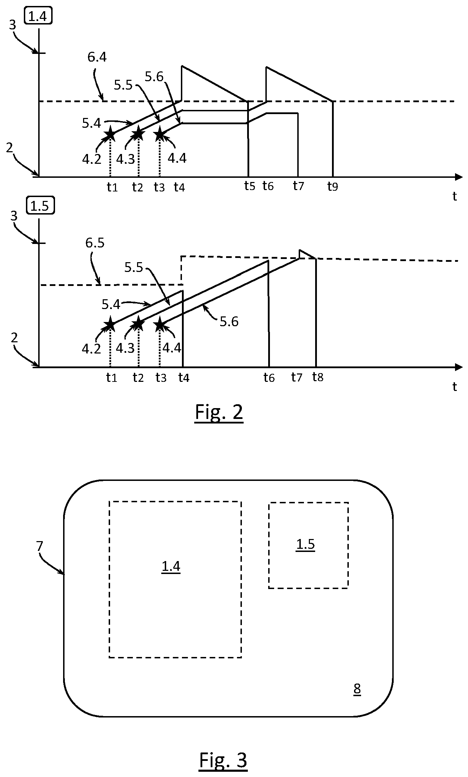

Für das in Figur 2 gezeigte Ausführungsbeispiel liegen drei Benachrichtigungen 4.2, 4.3, 4.4 in Form von Systemmeldungen vor, die um zwei mögliche Benachrichtigungskanäle 1.4, 1.5 konkurrieren, wobei die schematisch vereinfachte Darstellung in Fig. 3 verdeutlicht, dass die beiden Benachrichtigungskanäle 1.4, 1.5 durch zwei Areale unterschiedlicher Größe auf einem Display 7 gebildet werden, das einer Mensch-Maschine-Schnittstelle 8 zugeordnet ist.

Aus Figur 2 ist ersichtlich, dass der Benachrichtigungskanal 1.4 aufgrund des niedriger angesetzten Kanalschwellwerts 6.4 den Vorzug gegenüber dem Benachrichtigungskanal 1.5 hat. Gleichwohl weist zunächst keine der Benachrichtigungen 4.2, 4.3, 4.4, die zu den Zeitpunkten t1, t2 und t3 zeitlich versetzt in die Warteschleifen für die Benachrichtigungskanäle 1.4, 1.5 aufgenommen werden, eine für die Weiterleitung ausreichende Prioritätszahl 5.4, 5.5, 5.6 auf. Aufgrund der ansteigenden Dynamik der Prioritätszahlen 5.4, 5.5, 5.6 nähern sich diese im weiteren zeitlichen Verlauf den beiden Kanalschwellwerten 6.4, 6.5, wobei die Benachrichtigung 4.2 als Erstes den Schwellwert 6.4 des Benachrichtigungskanals 1.4 übersteigt und in diesen weitergeleitet wird. Damit ist eine Veränderung der Zustandsdaten der Mensch-Maschine-Schnittstelle 8 verbunden, die zu einer weiteren dynamischen Anpassung der Prioritätszahlen 5.4, 5.5, 5.6 führt. Dabei wird die Prioritätszahl 5.4, die der weitergeleiteten Benachrichtigung 4.2 zugeordnet ist, um einen konstanten Wert erhöht, wobei in der Folge eine Degression eintritt. Mit dieser Maßnahme wird bewirkt, dass die Benachrichtigung 4.2 für eine vorbestimmte Zeit auf dem Benachrichtigungskanal 1.4 aktiv bleibt und erst dann erlischt, wenn ihre Prioritätszahl 5.4 wieder unter die Kanalschwelle 6.4 fällt. Während dieser Zeit führt die Veränderung der Zustandsdaten der Mensch-Maschine-Schnittstelle 8 dazu, dass die Prioritätszahlen 5.5, 5.6 der Benachrichtigungen 4.3, 4.4 nicht weiter ansteigen.

Die Aktivierung des ersten Benachrichtigungskanals 1.4 hat Auswirkungen auf den zweiten Benachrichtigungskanal 1.5. Ersichtlich ist, dass mit der Darstellung der Benachrichtigung 4.2 auf dem ersten Benachrichtigungskanal 1.4 der Kanalschwellwert 6.5 des zweiten Benachrichtigungskanals 1.5 bei t4 ansteigt. Damit ist die Eröffnung eines weiteren Fensters auf dem Display 7 mit erhöhten "Kosten" verbunden, wobei die Anhebung des Kanalschwellwerts 6.5 im weiteren zeitlichen Verlauf relaxiert. Dieser Rückgang des Kanalschwellwerts 6.5 reicht jedoch nicht aus, um bei t6 die erneute Aktivierung des präferierten Benachrichtigungskanals 1.4 aufzuhalten, wobei die Prioritätszahl 5.5 den Kanalschwellwert 6.4 übersteigt und die nächste Benachrichtigung 4.3 für die Darstellung weitergeleitet wird. Lediglich für die Zeitspanne von t7 bis t8 tritt eine zusätzliche Aktivierung des Benachrichtigungskanals 1.5 durch die Benachrichtigung 4.4 auf.

## Patentansprüche

1. Benachrichtigungsmanagementverfahren für eine fahrzeugbasierte Mensch-Maschine-Schnittstelle (8) mit mindestens einem Benachrichtigungskanal (1.1, ...,1.5), wobei ein Benachrichtigungsmanagementsystem eine an mindestens einen Fahrzeuginsassen und/oder ein Fahrzeugfunktionsmodul gerichtete Benachrichtigung (4.1, ...,4.4) abhängig von einer mit der Benachrichtigung verknüpften Priorität an den Benachrichtigungskanal (1.1, ...,1.5) weiterleitet oder die Benachrichtigung (4.1, ...,4.4) zurückhält;
wobei
- die mit der Benachrichtigung (4.1, ...,4.4) verknüpfte Priorität durch eine Prioritätszahl (5.1, ...,5.6) festgelegt ist;
- die Benachrichtigung (4.1, ...,4.4) dann ausgewählt und an den Benachrichtigungskanal (1.1, ...,1.5) weitergeleitet wird, wenn deren Prioritätszahl (5.1, ...,5.6) einen dem Benachrichtigungskanal (1.1, ...,1.5) zugeordneten Kanalschwellwert (6.1, ...,6.5) übersteigt und diese die höchste Prioritätszahl (5.1, ...,5.6) für den jeweiligen Benachrichtigungskanal (1.1, ...,1.5) aufweist; und
- der Kanalschwellwert zeitlich veränderlich ist und in einem Normalbetriebsmodus vom Benachrichtigungsmanagementsystem in vorgegebenen Zeitintervallen auf der Grundlage von Fahrdaten und/oder Fahrzeugumfelddaten und/oder Fahrzeugdaten und/oder Zustandsdaten der Mensch-Maschine-Schnittstelle und/oder mindestens einer zeitlich vorausgegangenen Benachrichtigungsübermittlung und/oder Fahrzeuginsassenbeobachtungsdaten zwischen einem Minimalschwellwert (2) und einem Maximalschwellwert (3) festgelegt wird,
**dadurch gekennzeichnet, dass**
das Benachrichtigungsmanagementsystem für eine Mensch-Maschine-Schnittstelle mit mehreren Benachrichtigungskanälen (1.1, ...,1.5) für jeden einzelnen der Benachrichtigungskanäle (1.1, ...,1.5) einen separaten, zeitlich veränderlichen Kanalschwellwert (6.1, ..., 6.5) festlegt und einer Benachrichtigung (4.1, ..., 4.4) für mindestens zwei der Benachrichtigungskanäle (1.1, ...,1.5) jeweils eine separate Prioritätszahl (5.1, ..., 5.6) zugeordnet ist; und
eine Änderung des Kanalschwellwerts eines ersten Benachrichtigungskanals (1.1, ...,1.5) die Änderung des Kanalschwellwerts (6.1, ..., 6.5) mindestens eines zweiten Benachrichtigungskanals (1.1, ...,1.5) bedingt.

2. Benachrichtigungsmanagementverfahren nach Anspruch 1,
**dadurch gekennzeichnet, dass**
die Prioritätszahl einer Benachrichtigung (4.1, ..., 4.4) zumindest bis zur Übermittlung an den Benachrichtigungskanal (1.1, ...,1.5) zeitlich veränderlich ist und im Normalbetriebsmodus vom Benachrichtigungsmanagementsystem in vorgegebenen Zeitintervallen auf der Grundlage von Fahrdaten und/oder Fahrzeugumfelddaten und/oder Fahrzeugdaten und/oder mindestens einer zeitlich vorausgegangenen Benachrichtigungsübermittlung durch die Mensch-Maschine-Schnittstelle und/oder Fahrzeuginsassenbeobachtungsdaten und/oder der Verweildauer in einer Warteschleife des Benachrichtigungskanals (1.1, ...,1.5) und/oder der Dauer eines Aktivierungszustands einer Benachrichtigung (4.1, ..., 4.4) im Benachrichtigungskanal (1.1, ...,1.5) auf einen Wert zwischen einem Prioritätsminimum oberhalb des Minimalschwellwerts (2) und einem Prioritätsmaximum unterhalb des Maximalschwellwert (3) festgelegt wird.

3. Benachrichtigungsmanagementverfahren nach Anspruch 1 oder 2,
**dadurch gekennzeichnet, dass**
das Benachrichtigungsmanagementsystem nach einer Weiterleitung einer Benachrichtigung (4.1, ..., 4.4) an einen Benachrichtigungskanal (1.1, ...,1.5) den zugeordneten Kanalschwellwert (6.1, ...,6.5) im nächsten Zeitintervall anhebt.

4. Benachrichtigungsmanagementverfahren nach Anspruch 3,
**dadurch gekennzeichnet, dass**
nach einer Weiterleitung einer Benachrichtigung (4.1, ..., 4.4) an einen Benachrichtigungskanal (1.1, ...,1.5) der dem Benachrichtigungskanal (1.1, ...,1.5) zugeordnete Kanalschwellwert (6.1, ...,6.5) für eine vorbestimmte Zeitdauer auf den Maximalschwellwert (3) gesetzt wird.

5. Benachrichtigungsmanagementverfahren nach einem der Ansprüche 3 oder 4,
**dadurch gekennzeichnet, dass**
nach dem Anheben des zugeordneten Kanalschwellwerts (6.1, ..., 6.5) für eine vorgegebene Zeitspanne nach der Weiterleitung der Benachrichtigung (4.1, ..., 4.4) eine Degression des zugeordneten Kanalschwellwerts (6.1, ..., 6.5) eintritt.

6. Benachrichtigungsmanagementverfahren nach einem der Ansprüche 1 bis 5,
**dadurch gekennzeichnet, dass**
eine in einen Benachrichtigungskanal (1.1, ...,1.5) weitergeleitete Benachrichtigung (4.1, ..., 4.4) dort so lange aktiv bleibt, bis die Prioritätszahl (5.1, ..., 5.6) der Benachrichtigung (4.1, ..., 4.4) unter dem zugeordneten Kanalschwellwert (6.1, ..., 6.5) liegt.

7. Benachrichtigungsmanagementverfahren nach einem der Ansprüche 1 bis 6,
**dadurch gekennzeichnet, dass**
auf der Grundlage von Fahrdaten und/oder Fahrzeugumfelddaten und/oder Fahrzeugdaten und/oder Fahrzeuginsassenbeobachtungsdaten und/oder einer fahrzeugexternen Benachrichtigung eine Umschaltung vom Normalbetriebsmodus auf einen regelbasierten Modus für mindestens einen Benachrichtigungskanal (1.1, ...,1.5) der Mensch-Maschine-Schnittstelle erfolgt und das Benachrichtigungsmanagementsystem für mindestens einen für den regelbasierten Modus ausgewählten Benachrichtigungskanal (1.1, ...,1.5) den Kanalschwellwert (6.1, ..., 6.5) auf den Minimalschwellwert (2) oder den Maximalschwellwert (3) festgelegt.

8. Fahrzeug mit Benachrichtigungsmanagementsystem für eine Mensch-Maschine-Schnittstelle
**dadurch gekennzeichnet, dass**
das Benachrichtigungsmanagementsystem gemäß des Benachrichtigungsmanagementverfahrens nach einem der Ansprüche 1 bis 7 ausführbar ist.

## Claims

1. Notification management method for a vehicle-based human-machine interface (8) having at least one notification channel (1.1, ..., 1.5), a notification management system forwarding a notification (4.1, ..., 4.4) directed to at least one vehicle occupant and/or to a vehicle function module to the notification channel (1.1, ..., 1.5) depending on a priority associated with the notification or withholding the notification (4.1, ..., 4.4);
- the priority associated with the notification (4.1, ...,4.4) being fixed by a priority number (5.1, ...,5.6);
- the notification (4.1, ..., 4.4) then being selected and forwarded to the notification channel (1.1, ..., 1.5) if its priority number (5.1, ..., 5.6) exceeds a channel threshold value (6.1, ..., 6.5) assigned to the notification channel (1.1, ..., 1.5) and it has the highest priority number (5.1, ..., 5.6) for the relevant notification channel (1.1, ..., 1.5); and
- the channel threshold value being time-variable and being set in a normal operating mode by the notification management system at predetermined time intervals on the basis of driving data and/or vehicle environment data and/or vehicle data and/or status data of the human-machine interface and/or at least one previous notification transmission and/or vehicle occupant observation data between a minimum threshold value (2) and a maximum threshold value (3),
**characterized in that**
the notification management system for a human-machine interface having a plurality of notification channels (1.1, ..., 1.5) sets a separate, time-variable channel threshold value (6.1, ..., 6.5) for each of the notification channels (1.1, ..., 1.5), and a separate priority number (5.1, ..., 5.6) is assigned to a notification (4.1, ..., 4.4) for at least two of the notification channels (1.1, ..., 1.5); and a change in the channel threshold value of a first notification channel (1.1, ..., 1.5) causes the channel threshold value (6.1, ..., 6.5) of at least one second notification channel (1.1, ..., 1.5) to change.

2. Notification management method according to claim 1,
**characterized in that**
the priority number of a notification (4.1, ..., 4.4) is time-variable at least until transmission to the notification channel (1.1, ..., 1.5) and is set in the normal operating mode by the notification management system at predetermined time intervals on the basis of driving data and/or vehicle environment data and/or vehicle data and/or at least one previous notification transmission by the human-machine interface and/or vehicle occupant observation data and/or the length of time spent in a waiting loop of the notification channel (1.1, ..., 1.5) and/or the duration of an activation state of a notification (4.1, ..., 4.4) in the notification channel (1.1, ..., 1.5) to a value between a priority minimum above the minimum threshold value (2) and a priority maximum below the maximum threshold value (3).

3. Notification management method according to either claim 1 or claim 2,
**characterized in that**
the notification management system, after forwarding a notification (4.1, ..., 4.4) to a notification channel (1.1, ..., 1.5), raises the assigned channel threshold value (6.1, ..., 6.5) in the next time interval.

4. Notification management method according to claim 3,
**characterized in that**
after forwarding a notification (4.1, ..., 4.4) to a notification channel (1.1, ..., 1.5), the channel threshold value (6.1, ..., 6.5) assigned to the notification channel (1.1, ..., 1.5) is set to the maximum threshold value (3) for a predetermined period of time.

5. Notification management method according to any of claims 3 or 4, **characterized in that**
after raising the assigned channel threshold value (6.1, ..., 6.5) for a predetermined period of time after forwarding the notification (4.1, ..., 4.4), a degression of the assigned channel threshold value (6.1, ..., 6.5) occurs.

6. Notification management method according to any of claims 1 to 5, **characterized in that**
a notification (4.1, ..., 4.4) forwarded to a notification channel (1.1, ..., 1.5) remains active there until the priority number (5.1, ..., 5.6) of the notification (4.1, ..., 4.4) is below the assigned channel threshold value (6.1, ..., 6.5).

7. Notification management method according to any of claims 1 to 6, **characterized in that**
on the basis of driving data and/or vehicle environment data and/or vehicle data and/or vehicle occupant observation data and/or a vehicle-external notification, a switchover from the normal operating mode to a rule-based mode takes place for at least one notification channel (1.1, ..., 1.5) of the human-machine interface and the notification management system sets the channel threshold value (6.1, ..., 6.5) to the minimum threshold value (2) or the maximum threshold value (3) for at least one notification channel (1.1, ..., 1.5) selected for the rule-based mode.

8. Vehicle having notification management system for a human-machine interface
**characterized in that**
the notification management system can be executed according to the notification management method according to any of claims 1 to 7.

## Revendications

1. Procédé de gestion de notifications pour une interface homme-machine (8) basée sur un véhicule comportant au moins un canal de notifications (1.1, ..., 1.5), dans lequel un système de gestion de notifications transmet une notification (4.1, ..., 4.4) adressée à au moins un passager de véhicule et/ou à un module fonctionnel de véhicule en fonction d'une priorité associée à la notification au canal de notifications (1.1, ..., 1.5) ou intercepte la notification (4.1, ..., 4.4) ;
dans lequel
- la priorité associée à la notification (4.1, ...,4.4) est définie par un numéro de priorité (5.1, ...,5.6) ;
- la notification (4.1, ..., 4.4) est alors sélectionnée et transmise au canal de notifications (1.1, ..., 1.5) lorsque son numéro de priorité (5.1, ..., 5.6) franchit une valeur seuil de canal (6.1, ..., 6.5) attribuée au canal de notifications (1.1, ..., 1.5) et que ladite valeur seuil de canal présente le numéro de priorité (5.1, ..., 5.6) le plus élevé pour le canal de notifications (1.1, ..., 1.5) respectif ; et
- la valeur seuil de canal est variable dans le temps et, dans un mode de fonctionnement normal, est définie par le système de gestion de notifications à des intervalles de temps prédéterminés sur la base de données de conduite et/ou de données d'environnement de véhicule et/ou de données de véhicule et/ou de données d'état de l'interface homme-machine et/ou d'au moins une émission de notification antérieure et/ou de données d'observation de passagers de véhicule entre une valeur seuil minimale (2) et une valeur seuil maximale (3),
**caractérisé en ce que**
le système de gestion de notifications pour une interface homme-machine comportant plusieurs canaux de notifications (1.1, ..., 1.5) définit, pour chacun des canaux de notifications (1.1, ..., 1.5), une valeur seuil de canal (6.1, ..., 6.5) séparée et variable dans le temps et attribue à une notification (4.1, ..., 4.4), pour au moins deux des canaux de notifications (1.1, ..., 1.5), un numéro de priorité (5.1, ..., 5.6) séparé ; et une modification de la valeur seuil de canal d'un premier canal de notifications (1.1, ..., 1.5) conditionne la modification de la valeur seuil de canal (6.1, ..., 6.5) d'au moins un second canal de notifications (1.1, ..., 1.5).

2. Procédé de gestion de notifications selon la revendication 1,
**caractérisé en ce que**
le numéro de priorité d'une notification (4.1, ..., 4.4) est variable dans le temps au moins jusqu'à l'émission au canal de notifications (1.1, ..., 1.5) et, en mode de fonctionnement normal, est défini par le système de gestion de notifications à des intervalles de temps prédéterminés, sur la base de données de conduite et/ou de données d'environnement de véhicule et/ou de données de véhicule et/ou d'au moins une émission de notification antérieure par l'interface homme-machine et/ou de données d'observation de passagers de véhicule et/ou du temps d'attente dans une boucle d'attente du canal de notifications (1.1, ..., 1.5) et/ou de la durée d'un état d'activation d'une notification (4.1, ..., 4.4) dans le canal de notifications (1.1, ..., 1.5), à une valeur comprise entre un minimum de priorité au-dessus de la valeur seuil minimale (2) et un maximum de priorité en dessous de la valeur seuil maximale (3).

3. Procédé de gestion de notifications selon la revendication 1 ou 2,
**caractérisé en ce que**
le système de gestion de notifications, après une transmission d'une notification (4.1, ..., 4.4) à un canal de notifications (1.1, ..., 1.5), augmente la valeur seuil de canal (6.1, ..., 6.5) attribuée dans l'intervalle de temps suivant.

4. Procédé de gestion de notifications selon la revendication 3,
**caractérisé en ce que**
après une transmission d'une notification (4.1, ..., 4.4) à un canal de notifications (1.1, ..., 1.5), la valeur seuil de canal (6.1, ..., 6.5) attribuée au canal de notifications (1.1, ..., 1.5) est fixée à la valeur seuil maximale (3) pendant une durée prédéterminée.

5. Procédé de gestion de notifications selon l'une des revendications 3 ou 4, **caractérisé en ce que**
après l'augmentation de la valeur seuil de canal (6.1, ..., 6.5) attribuée pendant une période prédéterminée après la transmission de la notification (4.1, ..., 4.4), une dégression de la valeur seuil de canal (6.1, ..., 6.5) attribuée se produit.

6. Procédé de gestion de notifications selon l'une des revendications 1 à 5, **caractérisé en ce que**
une notification (4.1, ..., 4.4) transmise dans un canal de notifications (1.1, ..., 1.5) y reste active jusqu'à ce que le numéro de priorité (5.1, ..., 5.6) de la notification (4.1, ..., 4.4) soit inférieur à la valeur seuil de canal (6.1, ..., 6.5) attribuée.

7. Procédé de gestion de notifications selon l'une des revendications 1 à 6, **caractérisé en ce que**
sur la base de données de conduite et/ou de données d'environnement de véhicule et/ou de données de véhicule et/ou de données d'observation de passagers de véhicule et/ou d'une notification externe au véhicule, une commutation du mode de fonctionnement normal à un mode basé sur des règles est effectuée pour au moins un canal de notifications (1.1, ...1.5) de l'interface homme-machine et le système de gestion de notifications définit la valeur seuil de canal (6.1, ..., 6.5) à la valeur seuil minimale (2) ou à la valeur seuil maximale (3) pour au moins un canal de notifications (1.1, ..., 1.5) sélectionné pour le mode basé sur des règles.

8. Véhicule comportant un système de gestion de notifications pour une interface homme-machine
**caractérisé en ce que**
le système de gestion de notifications est exécutable selon le procédé de gestion de notifications selon l'une des revendications 1 à 7.
